(19) Europäisches Patentamt
European Patent Office
Office européen des brevets

(11) Veröffentlichungsnummer : **0 344 214 B1**

(12) **EUROPÄISCHE PATENTSCHRIFT**

(45) Veröffentlichungstag der Patentschrift :
**11.12.91 Patentblatt 91/50**

(51) Int. Cl.$^5$ : **E04C 5/12, B29C 67/18**

(21) Anmeldenummer : **88903174.6**

(22) Anmeldetag : **11.04.88**

(86) Internationale Anmeldenummer :
**PCT/DE88/00227**

(87) Internationale Veröffentlichungsnummer :
**WO 88/08065 20.10.88 Gazette 88/23**

(54) **VORRICHTUNG ZUR VERANKERUNG VON KUNSTSTOFF-SPANNGLIEDERN.**

(30) Priorität : **13.04.87 DE 3712514**
**06.11.87 DE 3737758**

(43) Veröffentlichungstag der Anmeldung :
**06.12.89 Patentblatt 89/49**

(45) Bekanntmachung des Hinweises auf die
Patenterteilung :
**11.12.91 Patentblatt 91/50**

(84) Benannte Vertragsstaaten :
**CH FR GB IT LI**

(56) Entgegenhaltungen :
**EP-A- 0 204 607**
**CH-A- 654 057**
**FR-A- 1 167 385**
**FR-A- 2 251 682**
**FR-A- 2 322 291**
**NL-A- 7 702 741**
**US-A- 2 386 473**

(73) Patentinhaber : **Plica, Peter, Dr. Ing.**
**Königswieser Strasse 87 a**
**W-8000 München 71 (DE)**

(72) Erfinder : **Plica, Peter, Dr. Ing.**
**Königswieser Strasse 87 a**
**W-8000 München 71 (DE)**

## Beschreibung

Die Erfindung betrifft eine Vorrichtung zur Verankerung faserverstärkter Kunststoff-Spannglieder mit einem am Kunststoff-Spannglied in Längsrichtung anliegenden Ankerstab.

Bekannt ist eine Vorrichtung zur Verankerung von vorgespannten Kunststoff-Spanngliedern (DE-A-26 10 915 A1,86 NL-A-77 02 741), bei der mehrere metallische, flache Ankerstäbe zwischen die Schichten eines faserverstärkten Kunststoffteils geklebt werden, das aus mehreren faserverstärkten Bändern oder Platten aufgebaut ist. Die keilförmigen Ankerstäbe leiten die Zugkraft über seitliche Ansätze in eine Ankerplatte. Um die Tragfähigkeit der Klebefuge zwischen Ankerstäben und Kunststoffschichten zu verbessern, werden die Ankerstäbe durch Spannbacken quer zusammengepreßt.

Die Nachteile dieser Vorrichtung liegen einmal in der zeitaufwendigen und ausführungstechnisch schwierigen Herstellung der Klebefugen. Zum anderen führen die steifen metallischen Ankerstäbe zusammen mit dem stärker dehnbaren Kunststoff zu hohen Spannungsspitzen in den Klebfugen.

Da die Ankerstäbe fest mit dem Kunststoffteil verbunden sind, ist nach dem Vorspannen eine Abstützung der Ankerplatte durch lange Druckkörper erforderlich, die die Baulänge der Verankerung erheblich vergrößern.

Eine weitere Schwierigkeit entsteht dadurch, daß bei langen Kunststoff-Spanngliedern der Dehnweg am Spannanker so groß wird, daß mehrere Pressenhübe notwendig werden. Bei jedem Zurückfahren der Presse muß das erst teilweise vorgespannte Spannglied verankert werden. Dazu müßten jedoch mehrere Ankerstäbe hintereinander in das Spannglied geklebt werden, was aus konstruktiven Gründen nicht möglich ist. Für das Vorspannen in mehreren Pressenhüben ist demnach die bekannte Verankerung nicht geeignet.

Wegen der geringen Festigkeit der Kunststoffmatrix und der Querdruckempfindlichkeit der eingebetteten Fasern können Kunststoff-Spannglieder nicht, wie bei Stahldrähten bekannt, mit Keilen verankert werden.

Auch Gewindeverankerungen für Spannstäbe aus Stahl, wie sie nach DE-C-25 37 649 (86 FR-A-23 22 291) mit langen, sich zum Ende verjüngenden Muttern vorgeschlagen werden, sind wegen der in etwa vierfachen Dehnungen der Kunststoff-Spannglieder gegenüber solchen aus Stahl nicht verwendbar. Die Mutter würde sich entweder nur im gespannten oder nur im ungespannten Zustand drehen lassen.

Aufgabe der Erfindung ist es, eine Verankerungsvorrichtung mit vorgefertigten Elementen aus faserverstärktem Kunststoff bei geringem Querdruck und gleichmäßiger niedriger Beanspruchung der Kunststoffmatrix des Spanngliedes zu schaffen und die Vorspannung mit mehreren Pressenhüben zu ermöglichen.

Die Aufgabe wird durch die Merkmale des Hauptanspruchs 1 gelöst. Zweckmäßige Ausgestaltungen der Erfindung ergeben sich aus den Unteransprüchen.

Die Vorteile der erfindungsgemäßen Verankerungsvorrichtung lassen sich in folgenden Punkten zusammenfassen:

1. Die Schubbeanspruchung in der Profilierung sinkt erheblich ab im Vergleich zur Verankerung eines Spanngliedes in einem metallischen, nahezu starren Ankerstab, weil Spannglied und Ankerstab in etwa gleiche Abmessungen besitzen und beide Elemente sich deshalb in gleicher Größenordnung dehnen.

2. Die Schubbeanspruchung in der Profilierung wird dadurch weiter vermindert, daß der Dehnungsverlauf über die Länge des Ankerstabes durch eine gestaffelte Faserbewehrung der Dehnung des Spanngliedes weitgehend angepaßt wird.

3. Die Schubbeanspruchung in der Profilierung läßt sich schließlich über die Länge des Ankerstabes planmäßig steuern. Da die Spannkraft ausschließlich über den Ankerblock in den Beton geleitet wird, ist die mögliche wirksame Länge des Ankerstabes nur durch konstruktive Bedingungen begrenzt.

4. Die sich in der Profilierung entwickelnden Querdruckkräfte werden durch die rohrförmige Distanzhülse zuverlässig aufgenommen. Eine Keilwirkung zwischen Spannglied und Ankerstab ist ausgeschlossen.

5. Die Vorspannung in mehreren Pressenhüben wird dadurch möglich, daß für die provisorische Verankerung der Spannglieder auswechselbare Ankerstäbe mit passender Profilierung verwendet werden.

6. Zum Ausgleich der Maßtoleranzen von Spannglied-Durchmesser und Banddicke der Ankerstäbe erhalten die Außenfläche der Ankerstäbe und die Distanzhülsen eine konische Form in Längsrichtung.

Die Erfindung wird anhand der Zeichnungen näher erläutert. Es zeigen

Fig. 1 den Längsschnitt einer festen Verankerung (Festanker)

Fig. 2 einen zu Fig. 1 gehörenden Querschnitt im Bereich der Ankerstäbe

Fig. 3 den Längsschnitt einer beweglichen Verankerung (Spannanker)

Fig. 4 den Längsschnitt einer Stoßverbindung

Fig. 5 die Ansicht einer weiteren Ausführungsform einer festen Verankerung (Festanker)

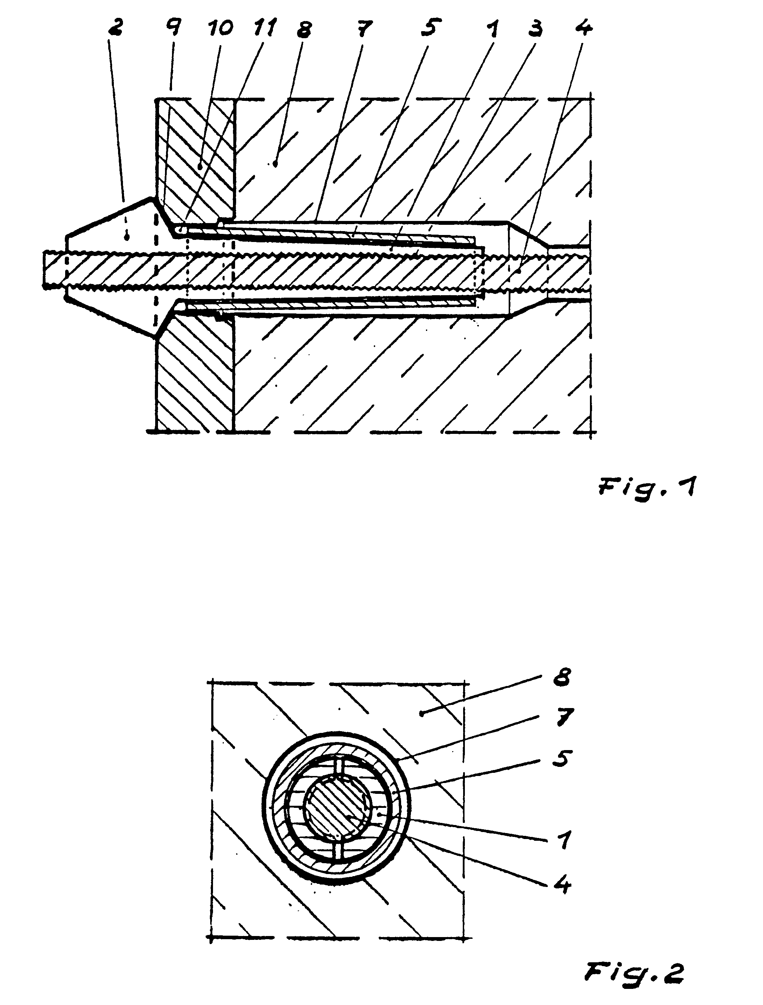

Die in Fig. 1 dargestellte Ausführungsform für eine feste Verankerung von Kunststoff-Spanngliedern in Spannbeton zeigt ein Spannglied 4 mit kreisförmigem Querschnitt und einer durchlaufenden Profilierung 3, die aus schraubenförmig angeordneten Rippen oder anderen Profilformen besteht. Zwei als Halbschale ausgebildete, bandartige Ankerstäbe 1 umfassen das Spannglied 4 und übernehmen über die Profilierung 3 dessen Kraft. Am äußeren Ende der beiden Ankerstäbe 1 sind Ankerblöcke 2 angeordnet, die im Längsschnitt eine annähernd dreieckige Form besitzen und im Querschnitt zusammen kreisförmig ausgebildet sind, um sich dem ebenfalls kreisförmigen Querschnitt des Spanngliedes 4 anzupassen.

Die kreisringförmige Auflagerfläche 9 der beiden Ankerblöcke überträgt die Vorspannkraft auf die Ankerplatte 10, die bevorzugt aus faserverstärktem Kunststoff besteht und im übrigen abhängig von der Anzahl der zu verankernden Spannglieder in bekannter Weise gestaltet ist.

Zur Lagesicherung der Ankerstäbe 1 am Spannglied 4 dient die rohrförmige Distanzhülse 5 aus faserverstärktem Kunststoff. Sie übernimmt gleichzeitig die in der Profilierung 3 auftretenden Querdruckkräfte und besitzt eine entsprechende Ringbewehrung. Um einen festen Sitz der Ankerstäbe 1 auf dem Spannglied 4 zu sichern, erhalten die Außenflächen der Ankerstäbe 1 und die Distanzhülse 5 eine konische Form. Durch Verschieben der Distanzhülse 5 in Längsrichtung werden die unvermeidbaren Maßtoleranzen der Verankerungsstäbe 1, der Distanzhülse 5 und des Spanngliedes 4 ausgeglichen.

Der in Fig. 2 dargestellte durchgehende Schlitz zwischen den beiden Ankerstäben 1 mit den Ankerblöcken 2 ist so groß, daß er auch bei minimalem Durchmesser des Spanngliedes 4 noch offen bleibt.

Die in der Ankerplatte 10 enthaltene Öffnung 11 und die Abmessungen des Hüllrohres 7 sind so festgelegt, daß die Verankerung sich ungehindert verformen kann. Die Distanzhülse 5 dient als Zentrierung des Spanngliedes 4 in der Öffnung 11. Die in Fig. 1 dargestellte Lage des Ankerblockes 2 am äußeren, zum Bauteilrand gerichteten Ende des Ankerstabes 1 ist nur zweckmäßig bei einer festen Verankerung. Vom Ankerblock 2 ausgehend nimmt die Dehnung im Spannglied 4 bei Null beginnend nach innen linear zu, so daß die Verformungen (Verlängerung) des Spanngliedes 4 und damit die des Ankerstabes 1 parabolisch anwachsen. Der Ankerstab 1 kann diesen Verformungen nur folgen, wenn seine Zugsteifigkeit im Bereich des Ankerblocks groß ist und dann nach innen hin durch Verringerung der Faserbewehrung und der Banddicke abnimmt. Nur bei dieser Ausführungsform ergibt sich die geplante, über die Länge des Ankerstabes 1 konstant verlaufende Beanspruchung der Profilierung 3, das erwünschte Minimum der Verankerungslänge und eine hohe Schwingfestigkeit in der Profilierung 3.

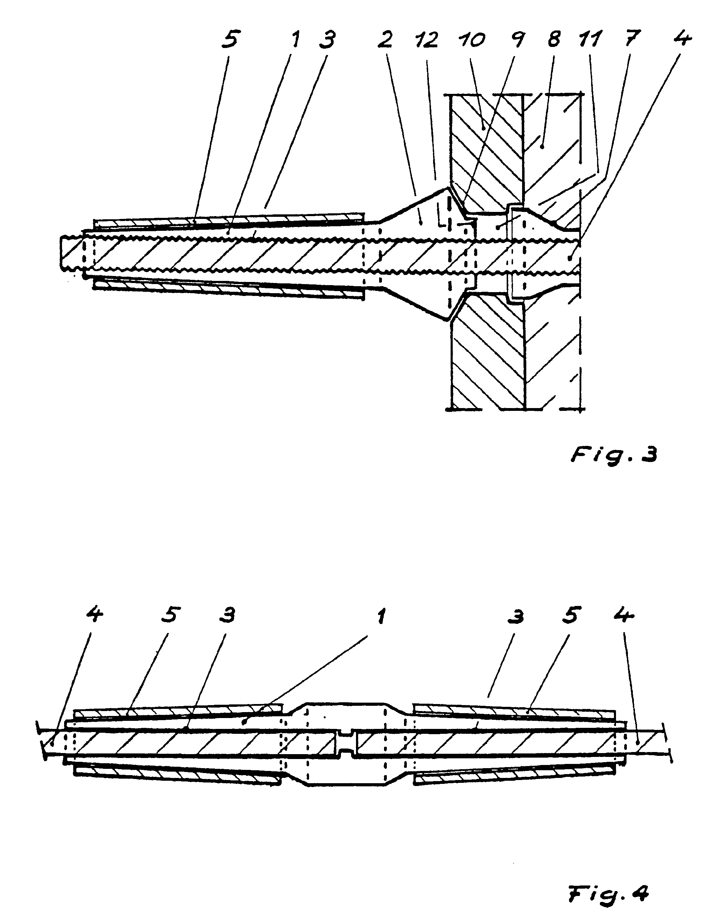

Bei der in Fig. 3 gezeigten Ausführungsform eines Spannankers für Kunststoff-Spannglieder in Spannbeton muß der Ankerblock 2 umgekehrt am inneren, in das Bauteil gerichteten Ende des Ankerstabes 1 angeordnet werden.

Vom Ankerblock 2 ausgehend nimmt die Dehnung im Spannglied 4 mit der vollen Dehnung beginnend linear nach außen ab, so daß die Verformungen (Verkürzung) des Spanngliedes 4 und damit die des Ankerstabes 1 parabolisch anwachsen. Um diesen Verformungen folgen zu können, erhält der Ankerstab 1 eine nach außen hin abnehmende Zugsteifigkeit. Damit ergibt sich auch die geplante, konstant verlaufende Beanspruchung in der Profilierung 3 und das Minimum der Verankerungslänge.

Im übrigen entspricht der Aufbau des in Fig. 3 gezeigten Spannankers dem des Festankers in Fig. 1.

Zusätzlich erhält der Ankerblock 2 in Fig. 3 eine Zentrierplatte 12, mit der die zentrische Lage des Spanngliedes 4 in der Öffnung 11 der Ankerplatte 10 gesichert wird.

Für das Vorspannen wird zunächst nur die Distanzhülse 5 auf das Spannglied 4 geschoben. Anschließend wird mit einer Spannpresse, die sich in bekannter Weise auf die Ankerplatte 10 abstützt, das Spannglied 4 gedehnt.

Nach Erreichen der vollen Vorspannkraft werden die als Halbschale ausgebildeten Ankerstäbe 1 um das Spannglied 4 gelegt und mit der Distanzhülse 5 gegen Verschieben gesichert. Danach wird der Druck in der Spannpresse abgelassen und die Verankerungsvorrichtung übernimmt die Einleitung der Spannkraft in die Ankerplatte 10.

Bei diesem als Normalfall anzusehenden Vorspannvorgang mit einem Pressenhub entspricht die Profilierung des ungedehnten Ankerstabes 1 der des voll vorgespannten Spanngliedes 4.

Die unvermeidbaren Längentoleranzen in der Profilierung aus Abmessungen, Werkstoffeigenschaften und Pressenkraft werden durch ein geringes "Spiel" in der Profilierung 3 und, falls erforderlich, durch eine leichte "Überspannung" ausgeglichen.

Sind bei langen Spanngliedern zwei oder auch vier Pressenhübe notwendig, so werden für die provisorischen Zwischenverankerungen besonders gekennzeichnete Ankerstäbe 1 verwendet, deren Profilierung 3 der 0,5-fachen bzw. der 0,25-fachen und 0,75-fachen Vorspannkraft entspricht. Die endgültige Verankerung erfolgt dann wieder mit dem "Normal"ankerstab für die volle Spannkraft.

Die Verankerung gemäß Fig. 3 läßt sich auch bei Vorspannung mit sofortigem Verbund vorteilhaft dort einsetzen, wo gerippte Drähte mit großer Tragkraft und großem Durchmesser auf möglichst kurzer Länge verankert werden sollen, wie es z. B. bei den Auflagerpunkten vorgespannter Dachbinder der Fall ist. Die am inneren Ende der Ankerstäbe 1 befindlichen Ankerblöcke 2 übertragen bei dieser Ausführungsform die Spannkraft über die vergrößerte Auflagerfläche 9 direkt in den Beton. Der weitere Aufbau der Verankerungsvorrichtung entspricht dem in Fig. 3. Die Distanzhülse wird in diesem Fall vor dem Vorspannen auf das Spannglied geschoben. Die Ankerstäbe 1 werden als Halbschalen nach dem Vorspannen aufgesetzt und mit der Distanzhülse gesichert.

Die in Fig. 4 dargestellte Ausführungsform der Verankerung ist für den Stoß zweier Spannglieder vorgesehen. Die als Halbschale ausgebildeten Ankerstäbe 1 umfassen die Enden der Spannglieder 4. Der Ankerstab 1 ist konstruktiv so ausgebildet, daß zwei sich gegenüberliegende Festanker gemäß Fig. 1 im Bereich der Ankerblöcke miteinander verbunden werden. Diesem Prinzip folgend nimmt die Banddicke des Ankerstabes 1 von der Mitte zu beiden Enden hin ab. Außerdem sind zwei Distanzhülsen 5 notwendig, um den festen Sitz der Profilierung 3 auf den beiden Spanngliedern zu sichern.

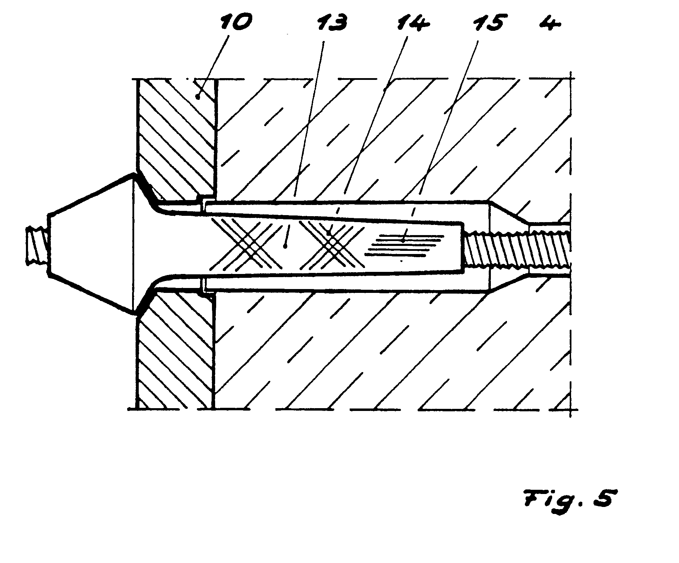

Eine weitere Ausführungsform des in Fig. 1 beschriebenen Festankers ist in Fig. 5 dargestellt.

Beim Spannen eines Festankers gemäß Fig. 1 verringert sich der Durahmesser des Spanngliedes 4. Der Durchmesser der Distanzhülse 5 hingegen wird durch die Sprengkräfte in der Profilierung 3 vergrößert. Beide Verformungen lockern den ursprünglich festen Formschluß in der Profilierung 3.

Dieser Nachteil wird bei der Ausführungsform gemäß Fig. 5 dadurch vermieden, daß der Ankerstab 1 das Spannglied 4 in Form einer langgestreekten Mutter 13 umschließt und die gestaffelte Faserbewehrung zwei gegensinnig laufende Wendeln 14 bildet. Die in dieser Form angeordnete Faserbewehrung wirkt wie eine strumpfartige Hülle um das Spannglied 4, die bekanntlich unter Längszug ihren Durchmesser verkleinert bzw. hier einen vorteilhaften Querdruck auf die Profilierung 3 erzeugt. Über die Wendelsteigung läßt sich die Größe des Querdrucks steuern. Da sich das Verhältnis von Querdruck und Längszug des Ankerstabes 1 laufend ändert, ist eine Kombination aus Faserbewehrung mit Wendeln 14 und Strängen 15 in Längsrichtung zweckmäßig. Die Profilierung 3 der in Fig. 5 gezeigten Mutter 13 und des Spanngliedes 4 ist als Schraubgewinde ausgebildet. Da die Mutter immer vor dem Spannen aufgeschraubt wird, ist die Gewindesteigung für Mutter und Spannglied gleich.

Die Ausführungsform der Verankerung gemäß Fig. 5 gilt sinngemäß ebenso für die Stoßverbindung gemäß Fig. 4.

Als Querschnittsform für die Kunststoffspannglieder sind neben dem Kreis auch ovale oder rechteckige Formen ohne Änderung des Verankerungsprinzips möglich. Bei derartigen querschnitten werden auch die Ankerstäbe entsprechend geformt, um die für die Profilierung notwendige Berührungsfläche zwischen Spannglied und Ankerstab zu schaffen.

Sollen die Spannglieder räumlich gekrümmt geführt werden, so ist eine Aufteilung der flach-rechteckigen Querschnitte in mehrere, annähernd quadratische Querschnitte zweckmäßig, weil dadurch Nebenspannungen infolge der Spanngliedkrümmung abgebaut werden.

**Patentansprüche**

1. Vorrichtung zur Verankerung von faserverstärkten Kunststoff-Spanngliedern mit mindestens einem, dem Kunststoffspannglied in Längsrichtung anliegenden Ankerstab, dadurch gekennzeichnet, daß

der aus faserverstärktem Kunststoff bestehende Ankerstab (1) gerade und bandförmig ausgebildet ist,

in Längsrichtung unterschiedliche Zugsteifigkeit durch eine gestaffelte Faserbewehrung aufweist,

an einem Ende mit einem Ankerblock (2) abschließt,

mit einer Profilierung (3) auf seiner dem Kunststoffspannglied (4) zugewandten Seite versehen ist, die einen Formschluß entweder mit dem ungedehnten oder dem gedehnten Kunststoff-Spannglied (4) herstellt, und daß

das Kunststoff-Spannglied (4) eine durchlaufende, auf den Ankerstab (1) abgestimmte Profilierung (3) aufweist.

2. Vorrichtung nach Anspruch 1 dadurch gekennzeichnet, daß der Ankerblook (2) eine im Längsschnitt annähernd dreieckige Form besitzt.

3. Vorrichtung nach Anspruch 1 und 2, dadurch gekennzeichnet, daß der Ankerblock (2) am äußeren, zum Bauteilrand gerichteten Ende des Ankerstabes (1) angeordnet ist.

4. Vorrichtung nach Anspruch 1 und 2, dadurch gekennzeichnet, daß der Ankerblock (2) am inneren, in das bauteil gerichteten Ende des Ankerstabes (1) angeordnet ist.

5. Vorrichtung zur Verankerung von faserverstärkten Kunststoff-Spanngliedern für die Herstellung eines Spanngliedstoßes, dadurch gekennzeichnet, daß ein gerader, bandförmiger und in Längsrichtung unterschiedliche Zugsteifigkeit aufweisender Ankerstab (1) an den zu stoßenden Kunststoff-Spanngliedern (4) in Längsrichtung anliegt, mit einer Profilierung (3) auf seiner dem Kunststoff-Spannglied (4) zugewandten Seite versehen ist und daß die Kunststoff-Spannglieder (4) eine durchlaufende, auf den Ankerstab abgestimmte Profilierung (3) aufweisen.

6. Vorrichtung nach Anspruch 3, 4 und 5 dadurch gekennzeichnet, daß ein Kunststoff-Spannglied (4) von zwei als Halbschale ausgebildeten Ankerstäben (1) und Ankerblöcken (2) umfaßt wird.

7. Vorrichtung nach Anspruch 6, dadurch gekennzeichnet, daß die als Halbschalen ausgebildeten Ankerstäbe (1) durch rohrförmige Distanzhülsen (5) zusammengehalten werden.

8. Vorrichtung nach Anspruch 3 oder 5 dadurch gekennzeichnet, daß ein Ankerstab (1) in Form einer langgestreckten Mutter (13) das Kunststoff-Spannglied (4) umschließt.

9. Vorrichtung nach Anspruch 8 dadurch gekennzeichnet, daß die gestaffelte Faserbewehrung der Mutter (13) zwei gegensinnig laufende, das Kunststoff-Spannglied (4) umschließende Wendeln (14) bildet.

10. Vorrichtung nach Anspruch 8 und 9 dadurch gekennzeichnet, daß die Profilierung (3) in der Mutter (13) und am Kunststoff-Spannglied (4) als Schraubgewinde ausgebildet ist.

## Claims

1. Device for anchoring fibre-reinforced plastic prestressing elements using at least one anchor rod apposed longitudinally to the plastic prestressing element characterized in that

the anchor rod (1) made of fibre reinforced plastic is straight and strip-shaped

comprises a differentiated rigidity under traction in the longitudinal direction by a staggered fibre reinforcement

terminates at one end in an anchor block (2)

and is provided at the side facing the plastic prestressing element (4) with a profile (3) creating a geometrical toothing either with the unstrained or the strained plastic prestressing element (4) and that

said plastic prestressing element (4) has a continuous profile (3) adapted to the anchor rod (1).

2. Device according to claim 1 characterized in that the anchor block (2) has a substantially triangular shape in its longitudinal section.

3. Device according to claim 1 and 2 characterized in that the anchor block (2) is arranged at the outer end of the anchor rod (1) orientated to the surface of the structure.

4. Device according to claim 1 and 2 characterized in that the anchor block (2) is arranged at the inner end of the anchor rod (1) orientated into the structure.

5. Device for anchoring fibre-reinforced plastic prestressing elements destinated for a coupling of prestressing elements characterized in that a straight strip-shaped anchor rod (1) comprising a differentiated rigidity under traction in the longitudinal direction is apposed longitudinally to the plastic prestressing elements (4) to be coupled, said anchor rod (1) being provided at its side facing the plastic prestressing elements (4) with a profile (3), and that the plastic prestressing elements (4) have a continuous profile (3) adapted to the anchor rod (1).

6. Device according to claim 3, 4 and 5 characterized in that a plastic prestressing element (4) is embraced by two anchor rods (1) with anchor blocks (2) shaped as semicircular sleeves.

7. Device according to claim 6 characterized in that the anchor rods (1) shaped as semicircular sleeves are held together by pipe-shaped locking sleeves (5).

8. Device according to claim 3 or 5 characterized in that an anchor rod (1) shaped as a stretched nut (13) embraces the plastic prestressing element (4).

9. Device according to claim 8 characterized in that the staggered fibre-reinforcement of the nut (13) is composed of two contrarotating spirals (14) embracing the plastic prestressing element (4).

10. Device according to claim 8 and 9 characterized in that the profile (3) of the nut (13) and the plastic prestressing element (4) is shaped as a thread.

## Revendications

1. Dispositif pour ancrer des éléments de précontrainte en plastique renforcé par des fibres, comprenant au moins une barre d'ancrage serrée longitudinalement contre l'élément de précontrainte en plastique, caractérisé en ce que

la barre d'ancrage (1) en plastique renforcé par des fibres est droite et rubanée,

présente une rigidité à la traction longitudinalement variable, due à un renforcement par fibres échelonnées,

comporte un bloc d'ancrage (2) à une extrémité

porte un profil (3) à son côté orienté vers l'élément de précontrainte en plastique (4) permettant un engrenage géometrique avec l'élément de précontrainte en plastique (4) allongé ou non allongé

et que l'élément de précontrainte en plastique (4) porte un profil (3) continu adapté à celui de la barre d'ancrage(1).

2. Dispositif conforme à la revendication 1 caractérisé en ce que le bloc d'ancrage (2) présente une forme approximativement triangulaire en coupe longitudinale.

3. Dispositif conforme aux revendications 1 et 2 caractérisé en ce que le bloc d'ancrage (2) est disposé à l'extrémité extérieure de la barre d'ancrage (1) orientée vers la surface de l'ouvrage.

4. Dispositif conforme aux revendications 1 et 2 caractérisé en ce que le bloc d'ancrage (2) est disposé à l'extrémité intérieure de la barre d'ancrage (1) orienté vers l'intérieur de l'ouvrage.

5. Dispositif pour ancrer des éléments de précontrainte en plastique pour la réalisation d'un ancrage rabouté, caractérisé en ce qu'une barre d'ancrage (1) droite, rubanée, présentant une rigidité à la traction longitudinalement variable et serrée longitudinalement contre les éléments de précontrainte en plastique (4) à rabouter, porte un profil (3) à son côté orienté vers l'élément de precontrainte en plastique (4) et que les éléments de précontrainte en plastique (4) portent un profil (3) continu adapté à celui de la barre d'ancrage.

6. Dispositif conforme aux revendications 3,4 et 5 caractérisé en ce qu'un élément de précontrainte en plastique (4) est enserrée par deux barres d'ancrage (1) et 2 blocs d'ancrage (2) en forme de coquilles à section semicirculaire.

7. Dispositif conforme à la revendication 6 caractérisé en ce que les barres d'ancrage (1) en forme de coquilles à section semicirculaire sont maintenues par des douilles(5).

8. Dispositif conforme aux revendications 3 ou 5 caractérisé en ce qu'une barre d'ancrage (1) en forme d'un écrou (13) allongé renferme l'élément de précontrainte en plastique (4).

9. Dispositif conforme à la revendication 8 caractérisé en ce que le renforcement par fibres échelonnées de l'écrou (13) comprend deux spires à sens opposé(14) enserrant l'élément de précontrainte en plastique (4).

10. Dispositif conforme aux revendications 8 et 9 caractérisé en ce que le profil (3) de l'écrou (13) et de l'élément de précontrainte en plastique (4) est réalisé en forme d'un profil vissé.

Fig. 1

Fig.2

Fig. 3

Fig. 4

10   13   14   15   4

Fig. 5